Europäisches Patentamt

European Patent Office

Office européen des brevets

(19)

(11) **EP 0 800 655 B1**

(12) **FASCICULE DE BREVET EUROPEEN**

(45) Date de publication et mention
de la délivrance du brevet:
**21.06.2000 Bulletin 2000/25**

(21) Numéro de dépôt: **96934970.3**

(22) Date de dépôt: **25.10.1996**

(51) Int Cl.⁷: **G01T 1/36**, G01T 1/16

(86) Numéro de dépôt international:
**PCT/FR96/01669**

(87) Numéro de publication internationale:
**WO 97/15842 (01.05.1997 Gazette 1997/19)**

(54) **METHODE ET DISPOSITIF POUR DETERMINER AU MOINS UN PARAMETRE CARACTERISTIQUE D'UN CORPS**

VERFAHREN UND VORRICHTUNG ZUR BESTIMMUNG WENIGSTENS EINES CHARAKTERISTISCHEN PARAMETERS EINES KÖRPERS

METHOD AND DEVICE FOR EVALUATING AT LEAST ONE CHARACTERISTIC PARAMETER OF A BODY

(84) Etats contractants désignés:
**BE DE GB IT NL**

(30) Priorité: **27.10.1995 FR 9513444**

(43) Date de publication de la demande:
**15.10.1997 Bulletin 1997/42**

(73) Titulaire: **INSTITUT FRANCAIS DU PETROLE
92502 Rueil-Malmaison (FR)**

(72) Inventeurs:
• **LYNCH, John
F-92500 Rueil-Malmaison (FR)**
• **FERREIRA DE PAIVA, Rogério
F-75017 Paris (FR)**

(56) Documents cités:
EP-A- 0 045 156          US-A- 4 060 726
US-A- 5 095 431          US-A- 5 440 386

• **NUCLEAR SCIENCE SYMPOSIUM CONFERENCE RECORD, ARLINGTON, OCT. 22 - 27, 1990, vol. 2 OF 2, 22 Octobre 1990, SMITH G C, pages 804-809, XP000232384 COLES M E ET AL: "APPLICATIONS OF CAT SCANNING FOR OIL AND GAS PRODUCTION RESEARCH"**

EP 0 800 655 B1

**Description**

La présente invention concerne une méthode pour déterminer au moins un paramètre caractéristique d'un corps à analyser, ledit corps étant traversé sur une certaine épaisseur par un rayonnement polychromatique ayant un spectre de fréquences connu et une intensité I, ledit corps étant constitué d'une ou plusieurs phases de composition connue, dans le but, par exemple, de corriger des artefacts de reconstruction ou de quantification.

La méthode selon l'invention permet de tenir compte par exemple de différents facteurs: la composition chimique du corps, la distribution en énergie du faisceau polychromatique, les éléments constituants ledit corps, ou la variation du coefficient d'absorption du rayonnement etc.

La méthode selon l'invention convient particulièrement pour modéliser et/ou corriger le durcissement d'un faisceau provenant d'un rayonnement polychromatique traversant un corps absorbant.

Dans toute la description, on désigne sous l'expression "durcissement d'un faisceau", l'augmentation de l'énergie moyenne d'un faisceau pendant la traversée d'un corps absorbant.

La présente invention s'applique particulièrement bien pour simuler le durcissement d'un faisceau de rayons X et corriger les artefacts introduits par ce durcissement.

La méthode selon l'invention, trouve des applications notamment pour mesurer l'épaisseur "effective" de matière, traversée par un faisceau de rayons X polychromatique dans un corps absorbant de composition chimique connue.

Elle est appliquée, par exemple, pour déterminer la répartition et le pourcentage de phases dans un composé dont on connaît la nature des phases le constituant.

La méthode selon l'invention trouve des applications notamment dans le cadre de la caractérisation de roches (roches réservoirs) dans le domaine pétrolier.

Lorsqu'un faisceau d'un rayonnement polychromatique traverse un corps absorbant, il subit un changement dû notamment à son interaction avec le ou les éléments constituants ce corps. Ainsi le spectre en énergie du faisceau après la traversée de ce corps diffère de celui qu'il possède à l'entrée. Ce changement est fonction notamment des énergies contenues dans le spectre et peut varier selon la position de la zone traversée par le faisceau et son épaisseur.

Ainsi, les plus faibles valeurs d'énergie étant associées à un fort coefficient d'absorption produisent dans la majorité des cas les artefacts de durcissement les plus importants.

Dans des applications à caractère quantitatif, il s'avère intéressant de posséder une méthode permettant de s'affranchir des incertitudes introduites par la nature polychromatique du rayonnement.

Il existe un certain nombre de méthodes décrites dans l'art antérieur pour minimiser, voire éliminer les incertitudes introduites par la polychromaticité du rayonnement.

Une des méthodes consiste à utiliser un filtre, par exemple une plaque de matériau absorbant une partie du moins du rayonnement et plus particulièrement les plus faibles énergies. Cette méthode présente néanmoins l'inconvénient d'absorber une partie du faisceau et de conduire à une perte d'intensité.

Selon une autre méthode, on réalise un étalonnage en utilisant un échantillon modèle ou de référence. Néanmoins un tel échantillon doit être homogène en composition et présenter une atténuation proche de celle de l'objet à analyser et il n'est pas toujours possible de respecter ces deux derniers critères de sélection.

Le brevet EP 0 045 156 enseigne une méthode permettant de déterminer les caractéristiques d'un rayonnement X, par exemple l'énergie de RX et de la source.

Le brevet US 5,095,431 décrit une méthode de calibration d'un rayonnement X en utilisant des formes standards différentes d'une forme circulaire.

Le brevet US 5,440,386 mentionne l'utilisation de cales d'épaisseur diverses pour calibrer rapidement des détecteurs utilisés dans un dispositif de mesure de profil d'épaisseur par rayons X.

Ces méthodes ne permettent donc pas de s'affranchir de manière simple des phénomènes introduits par la polychromaticité du faisceau.

La méthode selon l'invention a pour objet d'évoluer la variation d'intensité d'un rayonnement polychromatique ayant un spectre de fréquences connu, après traversée d'une certaine épaisseur d'un corps ou objet, constitué d'une ou plusieurs phases de composition connue, dans le but de corriger des erreurs ou artefacts liés à la nature polychromatique du rayonnement.

Elle est caractérisée en ce que l'on évalue la variation d'intensité du rayonnement en appliquant le modèle défini par la fonction de modélisation I(E) suivante :

$$I(E_i) = I_0(E_i) \exp\left\{ \sum_k \left[ L_k . \rho_k . \sum_j f_{j,k} \left( \frac{\mu}{\rho} \right)_{j,k} \right] \right\}$$

$I \rightarrow$ intensité du rayonnement X
$E_i \rightarrow$ énergie du canal i du spectre X
$L_k \rightarrow$ longueur traversée dans la phase k
$\rho_k \rightarrow$ densité de la phase k
$f_{j,k} \rightarrow$ fraction de l'élément j dans la phase

$$\left( \frac{\mu}{\rho} \right)_{j,k}$$

$\rightarrow$ coefficient d'atténuation massique pour chaque élément j de la phase k.

- On compare la variation d'intensité mesurée après traversée de ladite épaisseur du corps à analyser avec les valeurs de variations déduites du modèle, et
- On détermine le ou lesdits paramètres caractéristiques du corps analysé.

Pour réaliser le modèle, on modélise par exemple les influences respectives de paramètres caractéristiques d'une pluralité de couches successivement traversées par le rayonnement.

Suivant un mode de réalisation, on évalue la variation d'intensité sélectivement pour une ou plusieurs bandes de fréquence du rayonnement.

Il est possible de sélectionner l'énergie du rayonnement incident, de manière par exemple à éliminer les trop faibles énergies, qui introduisent des incertitudes sur les mesures.

On peut déterminer l'épaisseur effective de la zone traversée par un rayonnement, connaissant la composition du corps analysé, ou bien, si l'épaisseur du corps analysé est connue, déterminer la concentration de la zone traversée par le rayonnement en un ou plusieurs de ces constituants.

Lorsque l'on cherche à déterminer la texture d'un corps ou objet, on effectue plusieurs mesures d'intensité du rayonnement ayant traversé au moins une zone du corps analysé en faisant varier l'angle d'incidence du rayonnement par rapport à cette zone, on associe à chacune desdites valeurs mesurées une valeur d'intensité déterminée à partir d'un rayonnement polychromatique puis une valeur d'intensité déterminée par un rayonnement monochromatique, et à partir desdites valeurs on déduit la composition de ladite zone traversée par le rayonnement.

On utilise avantageusement un rayonnement polychromatique, émis suivant plusieurs directions et on détermine la distribution d'un ou de plusieurs constituants du corps dans au moins une zone traversée par ledit rayonnement.

La présente invention concerne un dispositif permettant de réaliser par exemple la tomographie d'un corps constitué de plusieurs phases de composition connues par évaluation de la variation d'intensité d'un rayonnement polychromatique ayant un spectre de fréquences connu, après traversée d'une certaine épaisseur dudit corps.

Le dispositif comporte au moins une enceinte à l'intérieur de laquelle on introduit le corps, une source de rayonnement polychromatique, au moins un dispositif pour détecter le rayonnement après traversée du corps, un ensemble dont la fonction est notamment de maintenir le corps à l'intérieur de ladite enceinte, un axe de rotation, l'ensemble de maintien comportant au moins un guide de longueur « L » qui entoure sur au moins une partie de sa longueur l'axe de rotation, et le corps étant relié à une extrémité de l'axe de rotation. Le dispositif est caractérisé en ce qu'il comporte au moins un système de traitement adapté

- pour évaluer la variation d'intensité en appliquant le modèle défini par la relation (1) suivante :

$$I(E_i) = I_0(E_i) \exp\left\{ \sum_k \left[ L_k \rho_k \sum_j f_{j,k} \left( \frac{\mu}{\rho} \right)_{j,k} \right] \right\}$$

$I \rightarrow$ intensité du rayonnement X

$E_i \rightarrow$ énergie du canal i du spectre X

$L_k \rightarrow$ longueur traversée dans la phase $k$

$\rho_k \rightarrow$ densité de la phase $k$

$f_{j,k} \rightarrow$ fraction de l'élément j dans la phase

- pour comparer la variation d'intensité mesurée après traversée de ladite épaisseur du corps à analyser avec les valeurs de variations déduites du modèle, et

- pour déterminer au moins un paramètre caractéristique du corps analysé.

La source de rayonnement polychromatique est par exemple solidaire du guide et/ou du support.

La méthode peut être utilisée par exemple pour simuler le durcissement d'un rayonnement polychromatique ayant traversé un corps, ou bien encore pour caractériser un échantillon, tel qu'un échantillon de roche ou un composite, dans le domaine pétrolier.

Avantageusement, la méthode selon l'invention trouve des applications dans tout le domaine des analyses basées sur l'exploitation de radiographies X. Elle permet notamment d'augmenter le pouvoir de discrimination des phases actuellement obtenu par les techniques classiques.

La méthode et le dispositif selon l'invention trouvent aussi avantageusement leur application pour étudier les milieux poreux, par exemple dans des domaines dont la liste non exhaustive est donnée ci-après à titre indicatif :

- en minéralogie pour identifier des minéraux au sein d'une roche et étudier leur distribution éventuelle,

- en mécanique des fluides en milieux poreux, par exemple pour définir la géométrie de grains ou de pores et leur connexité, ces paramètres ayant une influence non négligeable sur le comportement du fluide circulant à l'intérieur,

- en mécanique des roches, par exemple pour vérifier l'état de micro-fissuration des échantillons de roche,

- pour contrôler par tomographie des roches réservoirs.

Dans des domaines autres que celui de l'industrie pétrolière, la méthode selon l'invention est avantageusement utilisée pour contrôler par tomographie la texture des catalyseurs, de matériaux composites par exemple, de façon plus générale, pour étudier des corps par tomographie.

D'autres caractéristiques et avantages de la méthode selon l'invention, apparaîtront à la lecture de la description donnée ci-après, à titre illustratif et nullement limitatif, en se référant aux dessins annexés où :

- les figures 1A et 1B représentent des tables de correspondance entre des valeurs de transmittance observées pour un faisceau polychromatique (TRP) et des valeurs de transmittance pour un faisceau monochromatique (TRM) pour deux valeurs d'intensité;

- les figures 2, 3 montrent schématiquement un exemple de réalisation pour un montage permettant de valider la méthode selon l'invention,

- la figure 4 montre schématiquement les spectres Sf respectifs du rayonnement avant traversée d'un échantillon (II) et après sa traversée ($I_2$);

- la figure 5 montre schématiquement les spectres Sf respectifs du rayonnement polychromatique de rayons X, après traversée de l'échantillon, le premier ($I_2$) étant celui mesuré et le deuxième ($I_3$) étant déduit du modèle;

- la figure 6 montre schématiquement les spectres Sf respectifs du rayonnement polychromatique de rayons X, le premier ($I_x$) étant celui de la source, le deuxième ($I_{xf}$) étant celui filtré à travers une plaque de graphite;

- la figure 7 montre schématiquement les spectres Sf respectifs du rayonnement polychromatique de rayons X, le premier (Ie) étant celui obtenu expérimentalement après passage à travers un filtre et l'échantillon analysé, le deuxième ($I_M$) étant le spectre correspondant obtenu par le modèle; et

- la figure 8 représente schématiquement un exemple d'application de la méthode pour réaliser la tomographie d'un échantillon, et

- la figure 9 schématise une variante de réalisation d'un dispositif selon l'invention permettant d'obtenir une meilleure résolution.

Le spectre en énergie d'un faisceau issu d'un rayonnement polychromatique traversant un corps absorbant est modifié du fait notamment de son interaction avec les éléments chimiques constituant le corps. Cette modification dépend aussi des valeurs d'énergie du faisceau, car le coefficient d'absorption ou coefficient d'atténuation du corps varie en fonction de l'énergie.

Le corps est composé de plusieurs espèces chimiques et aussi de plusieurs phases ayant des natures différentes.

Pour un faisceau monochromatique traversant un corps constitué d'éléments chimiques différents et de plusieurs phases, il est possible de déterminer l'intensité du faisceau après la traversée du corps en faisant appel à la loi de Beer-Lambert qui s'exprime par exemple de la manière suivante :

$$I = I_0 \exp(-\mu t)$$

où I est l'intensité du faisceau monochromatique ayant traversé le corps, $I_0$ l'intensité du faisceau avant traversée du corps, t est l'épaisseur du corps, et $\mu$ est le coefficient d'absorption lié à l'énergie du faisceau monochromatique, déterminé en tenant compte des sections efficaces d'absorption et des densités atomiques des éléments.

Néanmoins, cette formule ne peut être appliquée de façon valable pour des rayonnements polychromatiques du fait de la distribution en énergie du spectre de tels faisceaux.

La mise en oeuvre de la méthode selon l'invention est donnée ci-après à titre illustratif et nullement limitatif en relation avec un rayonnement polychromatique, par exemple un faisceau de rayons X traversant un corps constitué d'éléments chimiques différents et éventuellement ayant des phases présentant des natures différentes.

On sait de plus que les artefacts introduits ou incertitudes introduites dans la mesure sont fonction de l'épaisseur de l'échantillon.

On procède par exemple aux étapes suivantes :

En supposant connue la composition chimique et minéralogique du corps traversé par le faisceau de rayons X,

- on mémorise les paramètres indicatifs de cette composition dans des mémoires, celles par exemple d'un micro-contrôleur, sous forme de tables de données,

- connaissant les éléments chimiques constitutifs des phases, la densité de ces phases et le coefficient massique d'atténuation pour chaque élément chimique j d'une phase k, on a accès au coefficient d'atténuation massique du faisceau dans chacune de ces phases,

- à partir d'une hypothèse faite sur la répartition des phases k ou d'une connaissance préalable de leur répartition, il est possible d'évaluer la distance ou l'épaisseur $L_k$ effectivement traversée par le faisceau, c'est-à-dire la distance qui tient compte de l'angle d'incidence du faisceau par rapport à un axe du corps,

- par ailleurs, on a mémorisé le spectre d'énergie du faisceau indicent, avant traversée du corps, par exemple sous forme d'un tableau de valeurs intensité/énergie.

A partir de ces données, on détermine la valeur d'intensité I du faisceau ayant traversé au moins une phase k sur une longueur $L_k$ ceci pour une valeur d'énergie Ei donnée à l'aide de la relation suivante:

Fonction de modélisation (1) :

$$I(E_i) = I_0(E_i) \exp\left\{ \sum_k \left[ L_k \cdot \rho_k \cdot \sum_j f_{j,k} \left( \frac{\mu}{\rho} \right)_{j,k} \right] \right\}$$

I → intensité du rayonnement X
$E_i$ → énergie du canal i du spectre X
$L_k$ → longueur traversée dans la phase k

$\rho_k \rightarrow$ densité de la phase k

$f_{j,k} \rightarrow$ fraction de l'élément j dans la phase

$$\left( \frac{\mu}{\rho} \right)_{j,k}$$

$\rightarrow$ coefficient d' atténuation massique pour chaque élément j de la phase k

Dans l'exemple donné ci-dessus de mise en oeuvre de la méthode selon l'invention, on modélise le corps en le subdivisant en fonction des phases de nature différente qu'il comporte.

Il en résulte une série de valeurs de transmittance polychromatique (TRP) pour chaque couche qui est fonction notamment de l'épaisseur effective traversée par le faisceau. Parallèlement, la transmittance pour plusieurs faisceaux monochromatiques (TRM) d'énergies choisie est calculée pour chaque épaisseur, ou couche $C_i$.

Le pas de subdivision est choisi notamment par rapport à la précision que l'on souhaite obtenir et/ou en fonction des dimensions caractéristiques des phases.

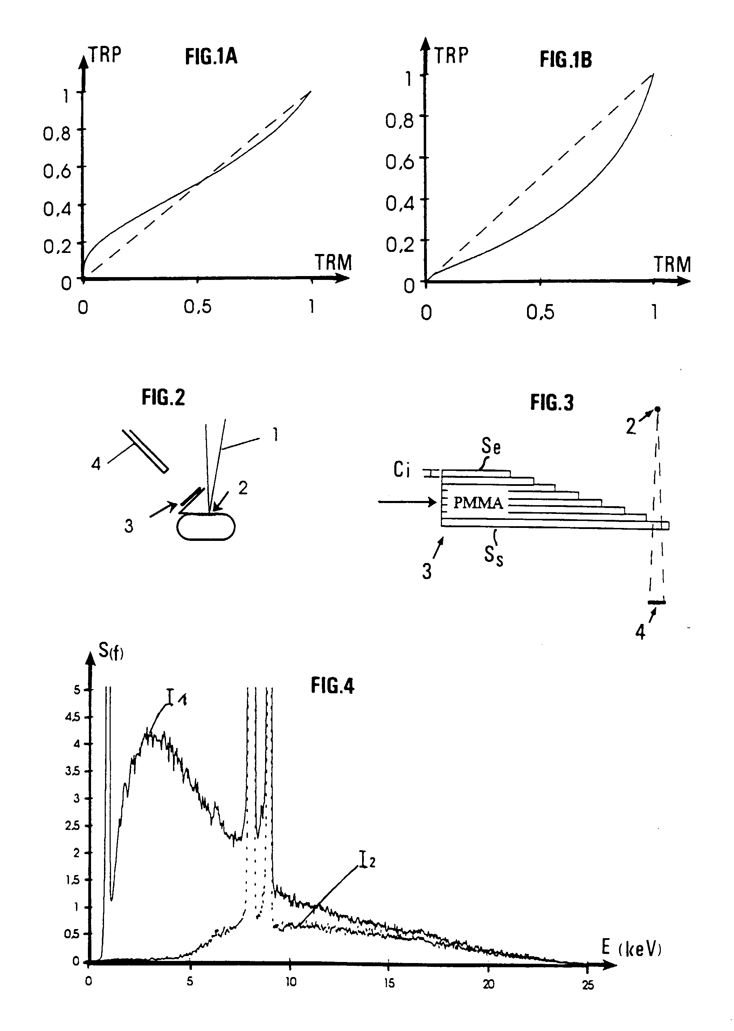

L'intensité initiale du faisceau prise en compte dans l'expression peut être une intensité obtenue pour la couche précédente à partir de la fonction de simulation 1. Par exemple sur la figure 3, on a schématisé un corps absorbant 3 modélisé par un empilement de couches ayant des épaisseurs $C_i$, par exemple correspondant chacune à une phase de nature différente.

La méthode selon l'invention permet par exemple de simuler le durcissement du faisceau d'un rayonnement polychromatique.

A l'aide de la fonction de simulation (1), on détermine la transmittance cumulée par intégration à chaque couche. On peut ainsi dresser une table de correspondance entre la transmittance polychromatique (TRP) et la transmittance monochromatique (TRM).

Les figures 1A et 1B montrent graphiquement deux exemples de table de conversion ainsi obtenues respectivement pour des faisceaux monochromatiques d'énergie de 14 keV et de 10 keV pour un échantillon de quartz et une source X sur une cible en or.

L'utilisation de la méthode appliquée à la simulation a été validée en utilisant un microscope électronique à balayage de type JEOL JSM-35CF équipé d'une diode Si(Li), associé à un système d'analyse Tracor TN 5500.

Le principe de la validation de la méthode selon l'invention à créer un rayonnement X au moyen d'un faisceau d'électrons frappant une cible métallique, que l'on applique à un corps ou objet à analyser et à utiliser un détecteur tel qu'un spectromètre pour mesurer, dans un premier temps, le spectre de la source X (utilisé comme donnée d'entrée par la modélisation), puis dans un deuxième temps le spectre des rayons X après traversée du corps absorbant que l'on cherche à comparer à un spectre obtenu en partant du spectre de la source X auquel on a appliqué la fonction de simulation (1) pour toutes les valeurs d'intensité d'énergie.

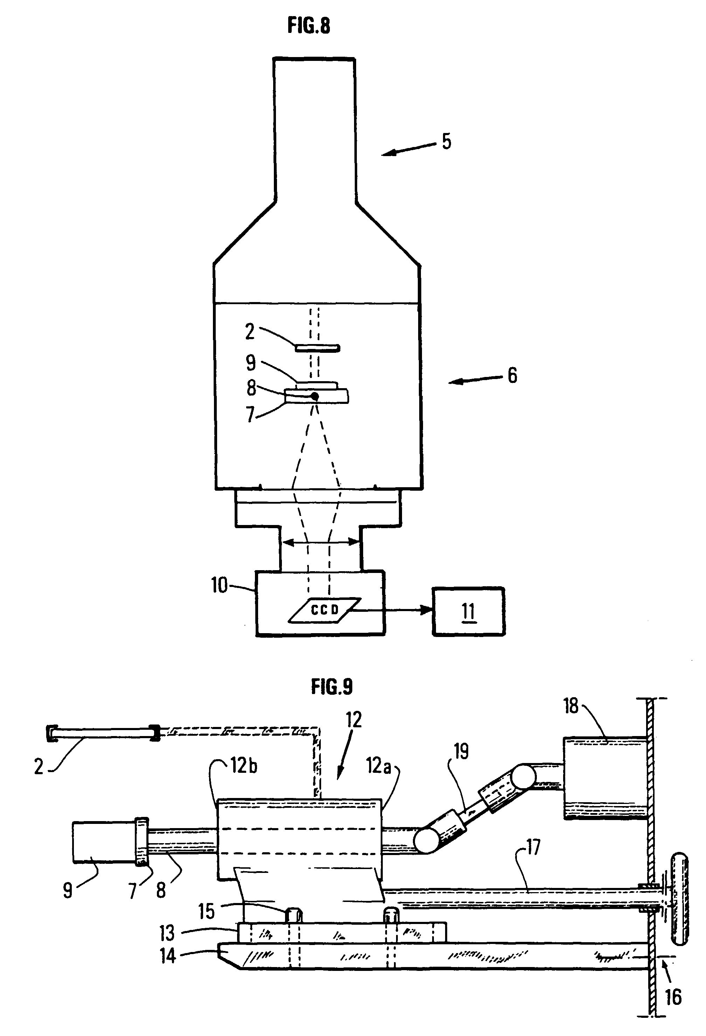

Les données relatives au spectre de la source X avant et après traversée de l'échantillon, ainsi que la fonction de simulation, sont par exemple mémorisées dans un micro-contrôleur 11 (Fig. 8).

Sur le schéma de principe de la figure 2, la source de rayonnement X polychromatique qui est par exemple un rayonnement de type synchrotron, ou encore une source produite par bombardement d'un faisceau électronique 1 sur une cible 2, générant des rayons X en direction de l'échantillon ou matériau absorbant 3. Le rayonnement issu de l'échantillon, est reçu par un détecteur 4 tel qu'un spectromètre positionné de façon à recueillir le spectre du rayonnement X ayant traversé le corps absorbant. Le corps 3 situé entre la source et le détecteur 4, présente une surface d'entrée Se située du côté du rayonnement X et une surface de sortie Ss située du côté du détecteur 4 (Fig.3).

Le faisceau de rayons X est envoyé sous un angle d'incidence $\alpha$ par rapport à un plan du corps, celui de sa face d'entrée par exemple. Sur la figure 3, le rayonnement X traverse le corps dans une direction perpendiculaire à sa surface d'entrée Se et ressort modifié par la surface de sortie Ss du corps avant d'être détecté par le spectromètre 4.

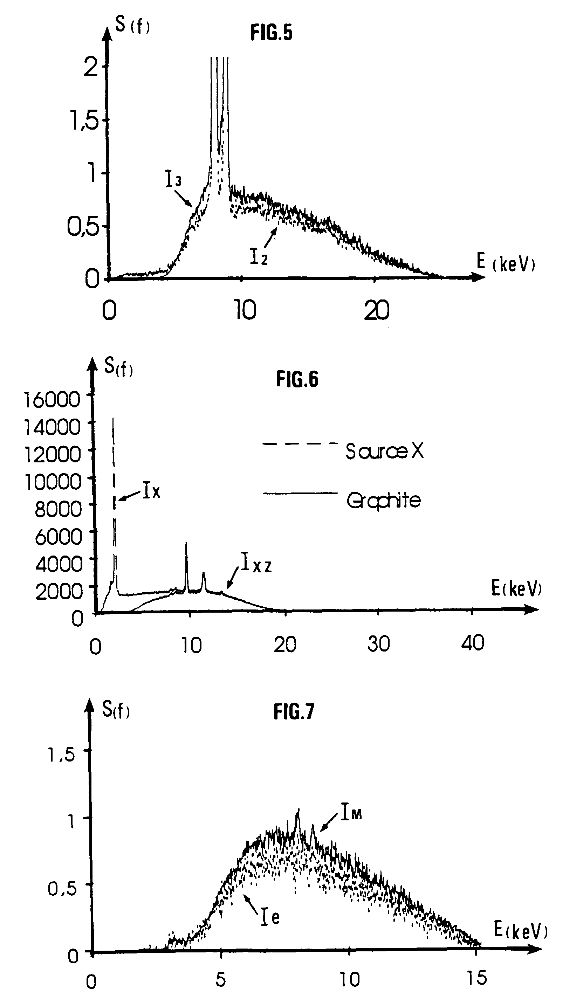

Les figures 4 et 5 montrent les résultats de simulation obtenus lorsque le corps absorbant est un échantillon de polyméthacrylate de méthyle (PPMA) d'environ 1 mm d'épaisseur.

Sur la figure 4, sont représentés les spectres donnés par les courbes $I_1$ et $I_2$ et mesurés respectivement de la source de rayons X avant et après la traversée d'un échantillon de PPMA ayant une épaisseur de 1 mm.

La tension d'accélération des électrons est, dans cet exemple, de 25 kV et la cible choisie est une feuille de cuivre de 1 $\mu$m d'épaisseur. Le cuivre fournit une raie principale à 8 keV, énergie qui présente une atténuation d'environ 47%. La courbe $I_2$ de la figure 4 montre néanmoins que l'atténuation des énergies inférieures à 5 keV est quasi totale, et que l'atténuation du spectre est d'environ 36 %.

On applique la fonction de modélisation (1) à chacune des valeurs d'énergie de la courbe $I_1$ et on détermine les valeurs d'intensités corrigées représentées par la courbe $I_3$ sur la figure 5.

On remarque que les spectres du rayonnement polychromatique de rayons après la traversée d'un échantillon

respectivement, mesuré référencé $I_2$ sur la figure 4, et simulé référencé $I_3$ sur la figure 5, sont sensiblement identiques, et ainsi que les valeurs d'intensité du faisceau déterminées à l'aide de la fonction de modélisation (1) sont sensiblement identiques aux valeurs d'intensité du faisceau mesurées par le spectromètre 4 après la traversée de l'échantillon, ce qui valide cette méthode de simulation.

Selon un autre mode de mise en oeuvre de la méthode, il est possible d'utiliser un filtre permettant d'atténuer les faibles énergies du spectre, ou filtre passe-haut, ces dernières étant responsables des artefacts les plus importants, donc du durcissement le plus important.

Les figures 6 et 7 valident la méthode de simulation appliquant la fonction (1).

Les courbes $I_x$ et $I_{xz}$ montrent respectivement le spectre d'intensité du faisceau obtenu pour une source X et le spectre d'intensité du faisceau filtré à l'aide d'un filtre graphique.

Sur la figure 7, on a représenté sur la courbe $I_e$ les valeurs d'intensité du faisceau mesuré après la traversée de l'échantillon ou du corps et du filtre graphique.

On applique la fonction de modélisation (1) à chacune des valeurs d'énergie de la courbe $I_{xz}$ de la figure 6 en assimilant le corps modélisé dans la fonction par l'ensemble constitué du corps absorbant et du filtre, et on détermine les valeurs d'intensité corrigées qui sont représentées sur la courbe $I_M$.

On observe bien que les deux courbes Ie et $I_M$ sont sensiblement identiques et donc que la fonction de modélisation (1) est valable pour un dispositif comportant un filtre en plus du corps à modéliser.

Avantageusement, une des mises en oeuvre de la méthode permet de déterminer l'épaisseur d'un échantillon dont on connaît la composition chimique et minéralogique.

On procède par exemple de la manière suivante :

- on établit le modèle de référence en déterminant des séries de valeurs d'intensité du rayonnement monochromatique à l'aide de la fonction de modélisation (1) pour différentes valeurs d'énergie, et pour différentes couches $C_i$, et l'on mémorise ces données, par exemple dans le micro-contrôleur,

- on effectue ensuite une série de mesures d'intensité du faisceau polychromatique de rayons X après traversée de l'échantillon, et on mémorise ces données dans le micro-contrôleur, ceci pour plusieurs zones de l'échantillon,

- on compare ensuite chacune des valeurs d'intensité mesurées aux valeurs déterminées pour le modèle et on lui associe, par exemple la valeur d'intensité la plus proche fournie par lui, et

- sachant qu'à une valeur d'intensité est associée une épaisseur ou couche CP, on en déduit la valeur de l'épaisseur effective de la zone traversée par le faisceau.

Par épaisseur effective, on entend l'épaisseur réelle de solides traversés en tenant compte de l'angle d'incidence du rayonnement X. En connaissant l'angle d'incidence du faisceau, il est possible de remonter à la valeur de l'épaisseur traversée.

La mise en oeuvre de la méthode selon l'invention permet aussi de déterminer la concentration d'un élément et/ou d'une phase contenue dans un corps dont on connaît la nature chimique et/ou minéralogique.

Par la méthode, on peut déterminer par exemple, la concentration de platine dans un catalyseur ayant comme matrice l'alumine. On fait l'hypothèse que l'épaisseur est connue, et on calcule les valeurs de l'intensité transmise correspondant à des valeurs de concentration du platine et/ou de l'alumine. Ces valeurs d'intensité déterminées sont ensuite mémorisées par exemple dans un tableau sous forme d'un couple (intensité du faisceau de rayons X, composition d'une phase choisie).

On effectue ensuite une mesure de l'intensité du rayonnement X ayant traversé le corps à analyser, à savoir la matrice et l'élément, et on compare cette valeur mesurée aux valeurs déterminées et mémorisées dans le tableau de données.

D'une façon identique à la méthode décrite ci-dessus, on associe à la valeur d'intensité mesurée la valeur la plus proche d'intensité déterminée et on en déduit la valeur de concentration pour un élément donné.

Cette manière de procéder peut aussi être étendue sans sortir du cadre de l'invention pour déterminer le pourcentage d'une phase dans une matrice connue, par exemple lorsque l'on cherche à déterminer la quantité de feldspath dans une roche réservoir.

La méthode de détermination de la variation l'intensité d'un faisceau de rayons X ayant traversé un échantillon peut être avantageusement utilisée dans des applications de tomographie, et en particulier pour réaliser des microtomographies d'un échantillon.

La plupart des logiciels connus de reconstruction tomographique sont adaptés à des faisceaux monochromatiques. Il s'avère donc nécessaire de s'affranchir de la polychromaticité du faisceau de rayonnement, par exemple en effectuant une correction des données mesurées à l'aide de la méthode précédemment décrite.

La figure 8 schématise un microtomographe qui présente notamment comme avantage d'obtenir des précisions au niveau de la résolution dans la gamme du micromètre.

La résolution obtenue pour les mesures varie entre 0,5 et 10µm, et de préférence entre 1 et 5µm.

Le microtomographe schématisé à la figure 8 est constitué de deux parties, une colonne 5 et un tiroir 6, par exemple. La colonne est par exemple une colonne d'un microscope électronique classique et ne sera donc pas décrite en détail. Le tiroir 6 comporte les cibles 2 bombardées par le faisceau électronique, qui sont la source du rayonnement X, présentant des caractéristiques sensiblement identiques à celles données à la figure 4 (spectre $I_1$). A l'intérieur de ce tiroir 6, se trouvent un porte-échantillon 7 solidaire d'un axe de rotation 8, sur lequel on a positionné l'échantillon 9. L'axe de rotation 8 permet le basculement de l'échantillon selon une flèche schématisée sur la figure, son déplacement latéral est réalisé, par exemple, par une translation de l'ensemble, axe de rotation, porte échantillon.

La figure 9 montre en détail une variante de réalisation du dispositif de la figure 8 permettant d'améliorer notamment la résolution tomographique.

On entend sous l'expression "la section reconstruite", la section reconstruite de l'échantillon ou du corps, perpendiculaire à l'axe de rotation, et qui est définie par la position de la source du rayonnement polychromatique et la position du détecteur.

Le dispositif comporte différents éléments énoncés ci-après et agencés de la façon suivante :

- un guide 12, ayant deux extrémités 12a et 12b et une longueur L, est disposé autour de l'axe de rotation 8 de manière classique pour que l'axe de rotation conserve ses déplacements en rotation et en translation éventuellement,

- le guide est solidaire d'une semelle 13 qui coulisse sur un support 14 à l'aide de vis de guidage 15,

- le support 14 est rendu solidaire de la paroi de la colonne, par exemple au niveau du tiroir 6 par des moyens de fixation 16 habituellement utilisés,

- la semelle 13 est reliée à un dispositif 17 passant à travers la paroi de la colonne et qui permet de commander son déplacement de façon manuelle ou automatiquement,

- l'axe de rotation 8 est relié à un moteur 18 par l'intermédiaire d'un ensemble 19 de joints homocinétiques connus de l'homme du métier. Ces joints assurent l'indépendance entre le moteur et le guide et/ou les déplacements de ce guide,

- le porte échantillon 7 est fixé à une extrémité de l'axe de rotation 8, et supporte l'échantillon 9 à analyser,

- on définit "d" comme étant la distance séparant l'extrémité du guide 12b la plus éloignée de la paroi de la colonne de la section reconstruite de l'échantillon.

Pour obtenir une résolution comprise dans l'intervalle précité, la valeur du rapport L/d est de préférence supérieure ou égale à 1.

L'agencement des éléments décrits ci-dessus permet avantageusement d'effectuer le déplacement de l'échantillon à l'intérieur de la colonne, par exemple de manière à obtenir plusieurs sections reconstruites de l'échantillon. A partir de ces sections reconstruites, il est possible de réaliser la tomographie de l'échantillon.

Avantageusement le dispositif de déplacement 17 est relié à un moyen de contrôle des déplacements pour obtenir avec précision la valeur de déplacement et de façon à optimiser le recoupement des différentes sections reconstruites.

Avantageusement, la cible 2 est rendue solidaire du guide, directement ou indirectement en utilisant des moyens de liaison classique, schématisés par des pointillés sur la figure. Sur la figure on a schématisé sa liaison directe avec le support.

Un tel mode de réalisation permet notamment d'augmenter la résolution et d'atteindre des résolution s comprises entre 0,5 et 10µm et de préférence entre 1 et 5µm.

Selon un autre mode de réalisation (non représenté), le guide est directement solidaire de la colonne par des moyens de fixation classiques.

La rotation de l'échantillon peut se faire manuellement par des multiples de 3° ou plus, par exemple ce qui correspond à un maximum de 120 rotations par tour complet. Une autre manière de procéder consiste à automatiser la rotation à l'aide d'un dispositif approprié, cette variante permettant d'augmenter le nombre de pas et de passer à 1200 pas par tour complet.

Le dispositif de détection 10 du faisceau ayant traversé l'échantillon comprend par exemple une caméra CCD pouvant être associée à tout dispositif permettant de s'affranchir d'effets parasites et d'augmenter la qualité et la précision des mesures. Le dispositif de détection 10 est associé à un système de traitement 11 programmé pour mettre en oeuvre les méthodes classiques de tomographie et par ailleurs la méthode d'évaluation de variation d'intensité selon l'invention

L'énergie du faisceau d'électrons est choisie, par exemple de façon à maximiser la production des photons de la raie choisie, la limite supérieure étant donnée par la capacité de la cuve haute tension de la colonne électronique dans cet exemple de réalisation. Le courant du faisceau est réglé pour obtenir un faisceau intense tout en conservant une sonde électronique de faibles dimensions.

Le choix du pas de rotation de l'échantillon est, quant à lui, fixé pour obtenir une résolution spatiale de l'ordre de celle des projections, le nombre de projections M obéissant à la loi suivante M est supérieur ou égal à $\pi/2 *N$ où N est le nombre de pixels d'une ligne des projections.

La méthode consiste à acquérir ensuite un ensemble de valeurs d'intensité associées à des angles de rotation de l'échantillon, pour un faisceau de rayons X. On obtient ainsi un tableau de données regroupant des valeurs d'intensité mesurées Mi et des valeurs d'angle βi.

Simultanément, on a déterminé les valeurs d'intensité $I_{Pi}$ correspondant au spectre incident et à différentes épaisseurs d'échantillons.

On a de plus déterminé les valeurs d'intensité $I_{Mi}$ obtenues pour plusieurs faisceaux monochromatiques, dans une gamme de valeurs d'énergie comprenant au moins les valeurs d'énergie du spectre du rayonnement envoyé sur l'échantillon et à différentes épaisseurs d'échantillons, de façon à constituer le modèle de référence. Ces deux ensembles de valeurs sont regroupés, par exemple en un seul tableau de données et mémorisés dans le micro-contrôleur.

Suivant la méthode, on compare chacune des valeurs d'intensité mesurées Mi aux valeurs d'intensité déterminées pour le faisceau polychromatique $I_{Pi}$, et après comparaison, on remplace la valeur mesurée Mi par la valeur déterminée la plus proche.

On compare ensuite la valeur $I_{Pi}$ aux valeurs obtenues pour des faisceaux monochromatiques et on conserve la valeur d'intensité que l'on aurait obtenue à l'aide d'un faisceau monochromatique, la plus proche par exemple. C'est cette valeur qui va être utilisée dans le logiciel de tomographie pour déterminer et caractériser la zone d'échantillon traversée.

Les méthodes éventuelles de traitement permettant d'améliorer les résolutions des images habituellement utilisées en tomographies peuvent être avantageusement utilisées sans sortir du cadre de l'invention. Cette manière de procéder permet avantageusement d'obtenir des précisions spatiales de l'ordre, ou inférieure, à la dizaine de microns en comparaison aux résolutions offertes en mode radiographique qui est inférieure à 3 μm.

On a décrit l'application de la méthode à l'analyse tomographique d'objets ou d'échantillons. On ne sortirait pas du cadre de l'invention toutefois en appliquant la méthode selon l'invention à la corrections d'artefact dans des appareils de tomographies du corps humain par exemple, tels que des scanners X.

## Revendications

1. Méthode pour déterminer au moins un paramètre caractéristique d'un corps à analyser, ledit corps étant traversé sur une certaine épaisseur par un rayonnement polychromatique ayant un spectre de fréquence connu et une intensité I, ledit corps étant constitué d'une ou de plusieurs phases de composition connue, dans le but de corriger des erreurs liées aux artefacts liés à la nature polychromatique du rayonnement, caractérisée en ce que :

   - on évalue la variation d'intensité du rayonnement en appliquant le modèle défini par la relation (1) suivante :

$$I(E_i) = I_0(E_i)\exp\left\{\sum_k\left[L_k.\rho_k.\sum_j f_{j,k}\left(\frac{\mu}{\rho}\right)_{j,k}\right]\right\}$$

$I \rightarrow$ intensité du rayonnement X
$E_i \rightarrow$ énergie du canal i du spectre X
$L_k \rightarrow$ longueur traversée dans la phase k
$\rho_k \rightarrow$ densité de la phase k
$f_{j,k} \rightarrow$ fraction de l'élément j dans la phase

$$\left(\frac{\mu}{\rho}\right)_{j,k}$$

$\rightarrow$ coefficient d'atténuation massique pour chaque élément j de la phase k.

- on compare la variation d'intensité mesurée après traversée de ladite épaisseur du corps à analyser avec les valeurs de variations déduites du modèle, et
- on détermine le ou lesdits paramètres caractéristiques du corps analysé.

2. Méthode selon la revendication 1 caractérisée en ce que l'on modélise les influences respectives de paramètres caractéristiques d'une pluralité de couches successivement traversées par le rayonnement.

3. Méthode selon l'une des revendications 1 à 2 caractérisée en ce que l'on évalue la variation d'intensité sélectivement pour une ou plusieurs bandes de fréquence du rayonnement.

4. Méthode selon l'une des revendications 1 à 3 caractérisée en ce que la composition du corps analysé étant connue, on détermine par comparaison l'épaisseur effective de la zone traversée par le rayonnement.

5. Méthode selon l'une des revendications 1 à 3 caractérisée en ce que l'épaisseur du corps analysé étant connue, on détermine par comparaison la concentration de la zone traversée par le rayonnement en un ou plusieurs de ses constituants.

6. Méthode selon l'une des revendications caractérisée en ce que l'on effectue plusieurs mesures d'intensité du rayonnement ayant traversé au moins ladite zone du corps analysé en faisant varier l'angle d'incidence du rayonnement par rapport à cette zone, on associe à chacune desdites valeurs mesurées une valeur d'intensité déterminée à partir d'un rayonnement polychromatique puis une valeur d'intensité déterminée pour un rayonnement monochromatique, et à partir desdites valeurs on déduit la composition de ladite zone traversée par le rayonnement.

7. Méthode selon la revendication 6, caractérisée en ce que l'on irradie un corps étudié au moyen d'un faisceau de rayonnement X polychromatique, suivant plusieurs directions et on détermine la distribution de constituants du corps dans au moins une zone traversée par ledit rayonnement.

8. Dispositif pour déterminer au moins une caractéristique d'un corps constitué d'une ou plusieurs phases de composition connues par évaluation de la variation d'intensité d'un rayonnement polychromatique ayant un spectre de fréquences connu, après traversée d'une certaine épaisseur dudit corps, comportant au moins une enceinte (6), ladite enceinte pouvant contenir ledit corps, une source d'un rayonnement polychromatique, au moins un dispositif (10) pour détecter le rayonnement après traversée dudit corps, un ensemble pour maintenir ledit corps (9) à l'intérieur de ladite enceinte, un axe de rotation (8), ledit ensemble comportant au moins un guide (12) de longueur « L » et entourant sur au moins une partie de sa longueur ledit axe de rotation (8) caractérisé en ce qu'il comporte au moins un systsème de traitement (11) adapté :

- pour évaluer cette variation d'intensité en appliquant le modèle défini par la relation (1) suivante :

$$I(E_i) = I_0(E_i) \exp \left\{ \sum_k \left[ L_k \rho_k \sum_j f_{j,k} \left( \frac{\mu}{\rho} \right)_{j,k} \right] \right\}$$

$I \rightarrow$ intensité du rayonnement X
$E_i \rightarrow$ énergie du canal i du spectre X
$L_k \rightarrow$ longueur traversée dans la phase $k$
$\rho_k \rightarrow$ densité de la phase $k$
$f_{j,k} \rightarrow$ fraction de l'élément j dans la phase

$$\left(\frac{\mu}{\rho}\right)_{j,k}$$

$\rightarrow$ coefficient d'atténuation massique pour chaque élément *j* de la phase *k*

- pour comparer la variation d'intensité mesurée après traversée de ladite épaisseur du corps à analyser avec les valeur de variations déduites du modèle, et
- pour déterminer au moins un paramètre caractéristique du corps analysé.

**9.** Dispositif selon la revendication 8, caractérisé en ce que ledit guide est relié à un support (14) à l'aide de moyens (13, 15) permettant son déplacement à l'intérieur de l'enceinte, ledit support étant solidaire d'une paroi de l'enceinte.

**10.** Dispositif selon l'une des revendications 8 ou 9, caractérisé en ce que la source du rayonnement polychromatique est solidaire dudit guide ou dudit support.

**11.** Dispositif selon l'une des revendications 8 à 10, caractérisé en ce qu'il est adapté pour réaliser une tomographie.

**12.** Utilisation de la méthode selon l'une des revendications 1 à 7, pour simuler le durcissement d'un rayonnement polychromatique ayant traversé un corps.

**13.** Application de la méthode selon l'une des revendications 1 à 7, pour caractériser un échantillon, tel qu'un échantillon de roche et/ou un composite, dans le domaine pétrolier.


**Claims**

**1.** A method for determining at least one characteristic parameter of a body to be analysed, polychromatic radiation of a known frequency spectrum being passed through a certain thickness of said body, said body consisting of one or more phases of known composition, the purpose being to correct the errors linked to the artefacts inherent in the polychromatic nature of the radiation, characterised in that:

- the change in the intensity of the radiation is evaluated by applying the model defined by the following relationship:

$$I(E_i) = I_0(E_i)\exp\left\{\sum_k\left[L_k\cdot\rho_k\cdot\sum_j f_{j,k}\left(\frac{\mu}{\rho}\right)_{j,k}\right]\right\}$$

I $\rightarrow$ intensity of the X-radiation
$E_i$ $\rightarrow$ energy of the channel i of the spectrum X
$L_k$ $\rightarrow$ length crossed in the phase k
$\rho_k$ $\rightarrow$ density of the phase k
$f_{jk}$ $\rightarrow$ fraction of the element j in the phase

$$\left(\frac{\mu}{\rho}\right)_{j,k}$$

$\rightarrow$ mass attenuation coefficient for each element j of the phase k,

- the variation in intensity measured after passing through said thickness of the body to be analysed is compared with the values of variations derived from the model and
- said characteristic parameter or parameters of the analysed body are determined.

**2.** A method as claimed in claim 1, characterised in that a model is built of the respective effects of characteristic parameters of a plurality of layers through which the radiation passes in succession.

**3.** A method as claimed in one of claims 1 to 2, characterised in that the change in intensity is selectively evaluated for one or more frequency bands of the radiation.

**4.** A method as claimed in one of claims 1 to 3, characterised in that, since the composition of the body under analysis is known, a comparison is made to determine the effective thickness of the zone through which the radiation has passed.

**5.** A method as claimed in one of claims 1 to 3, characterised in that, since the thickness of the body under analysis is known, a comparison is made to determine the concentration of -the zone through which the radiation has passed on the basis of one of more of its constituents.

**6.** A method as claimed in one of the preceding claims, characterised in that several intensity measurements are taken on the radiation after it has passed through at least the said zone of the body under analysis by varying the angle of incidence of the radiation relative to this zone, and an intensity value determined on the basis of polychromatic radiation and then an intensity value determined on the basis of monochromatic radiation is assigned to each of the said measured values and these values are used to derive the composition of the said zone through which the radiation has passed.

**7.** A method as claimed in claim 6, characterised in that the body under analysis is irradiated with a polychromatic X-ray beam along several directions and the distribution of the constituents of the body in at least one zone through which the radiation has passed is determined.

**8.** A device for determining at least one characteristic of a body made up of one or several phases of known composition by evaluating the change in intensity of polychromatic radiation with a known frequency spectrum after it has passed through a certain thickness of the said body, comprising at least one enclosure (6), the said enclosure being capable of containing the said body, a source of polychromatic radiation, at least one device (10) for detecting the radiation after it has passed through the said body, a unit to maintain the said body (9) inside the said enclosure, a rotary shaft (8), the said unit consisting of a guide (12) of a length "L" and surrounding the rotary shaft (8) over at least a part of its length, characterised in that it has at least one processing system (11), set up:

- to evaluation this variation in intensity by applying the model defined by the relationship (1) below:

$$I(E_i) = I_0(E_i)\exp\left\{\sum_k\left[L_k\cdot\rho_k\cdot\sum_j f_{j.k}\left(\frac{\mu}{\rho}\right)_{j.k}\right]\right\}$$

$E_i \rightarrow$ energy of the channel i of the spectrum X
$L_k \rightarrow$ length crossed in the phase k
$\rho_k \rightarrow$ density of the phase k
$f_{jk} \rightarrow$ fraction of the element j in the phase

$$\left(\frac{\mu}{\rho}\right)_{j.k}$$

$\rightarrow$ mass attenuation coefficient for each element j of the phase k,

- compare the measured variation in intensity after passing through said thickness of the body under analysis with the valuations for variations deduced from the model and
- determining at least one characteristic parameter of the analysed body.

9. A device as claimed in claim 8, characterised in that the said guide is joined to a support (14) by means (13, 15) which allow it to be displaced inside the enclosure, the said support being joined to a wall of the enclosure.

10. A device as claimed in one of claims 8 or 9, characterised in that the source of polychromatic radiation is joined to the said guide or the said support.

11. A device as claimed in one of claims 8 to 10, characterised in that it is designed to produce a tomography.

12. Use of the method as claimed in one of clais 1 to 7 for simulating the hardening of polychromatic radiation which has passed through a body.

13. Application of the method as claimed in one of claims 1 to 7 to the process of characterising a sample such as a rock sample and/or a composite in the field of the petroleum industry.

**Patentansprüche**

1. Verfahren zum Bestimmen wenigstens eines charakteristischen Parameters eines zu analysierenden Körpers, wobei dieser Körper über eine gewisse Dicke durch eine polychromatische Strahlung von einem bekannten Frequenzspektrum und einer Intensität I durchquert wird, dieser Körper aus einer oder mehreren Phasen bekannter Zusammensetzung gebildet wird mit dem Ziel, mit den Artefakten verknüpfte Fehler zu korrigieren, welche mit der polychromatischen Natur der Strahlung verknüpft sind, dadurch gekennzeichnet, daß:

   - man die Veränderungen der Intensität der Strahlung bewertet, indem man das durch die folgende Beziehung (1) definierte Modell zur Anwendung bringt:

$$I(E_i) = I_0(E_i)\exp\left\{\sum_k\left[L_k\rho_k\sum_j f_{j,k}\left(\frac{\mu}{\rho}\right)_{j,k}\right]\right\}$$

   worin

   $I \rightarrow$ Stärke bzw. Intensität der Strahlung X,
   $E_i \rightarrow$ Energie des Kanals i des Spektrums X,
   $L_k \rightarrow$ in der Phase k durchsetzte Länge,
   $\rho_k \rightarrow$ Dichte der Phase k
   $f_{j,k} \rightarrow$ Fraktion des Elementes j in der Phase

$$\left(\frac{\mu}{\rho}\right)_{j,k}$$

   $\rightarrow$ Massenschwächungskoeffizient für jedes Element j der Phase k bedeuten,

   - man die Veränderung der nach Durchgang durch diese Dicke des zu analysierenden Körpers gemessenen Strahlung mit aus dem Modell abgeleiteten veränderten Werten vergleicht und

   - man den oder diese charakteristischen Parameter des analysierten Körpers bestimmt.

2. Verfahren nach Anspruch 1, dadurch gekennzeichnet, daß man die jeweiligen Einflüsse von charakteristischen Parametern einer Vielzahl von Schichten, die nacheinander von der Strahlung durchsetzt werden, modellisiert.

3. Verfahren nach einem der Ansprüche 1 bis 2, dadurch gekennzeichnet, daß man die Veränderung der Intensität selektiv für eines oder mehrere Frequenzbänder der Strahlung bewertet.

4. Verfahren nach einem der Ansprüche 1 bis 3, dadurch gekennzeichnet, daß bei Kenntnis der Zusammensetzung des analysierten Körpers man durch Vergleich die effektive Dicke der durch die Strahlung durchsetzten Zone bestimmt.

5. Verfahren nach einem der Ansprüche 1 bis 3, dadurch gekennzeichnet, daß bei Kenntnis der Dicke des analysierten Körpers man durch Vergleich die Konzentration der durch die Strahlung durchsetzten Zone an einem oder mehreren ihrer Bestandteile bestimmt.

6. Verfahren nach einem der vorhergehenden Ansprüche, dadurch gekennzeichnet, daß man mehrere Messungen der Intensität der Strahlung, welche wenigstens diese Zone des analysierten Körpers durchsetzt hat, vornimmt, indem man den Einfallwinkel der Strahlung, bezogen auf diese Zone, variieren läßt, man jedem dieser gemessenen Werte einen bestimmten Wert der Intensität, ausgehend von einer polychromatischen Strahlung, zuordnet und dann einen Intensitätswert zuordnet, der für eine monochromatische Strahlung bestimmt ist, und ausgehend von diesen Werten man die Zusammensetzung dieser von der Strahlung durchsetzten Zone ableitet.

7. Verfahren nach Anspruch 6, dadurch gekennzeichnet, daß man einen untersuchten Körper vermittels eines Bündels polychromatischer Strahlung X nach mehreren Richtungen untersucht und man die Verteilung der Bestandteile des Körpers in wenigstens einer von dieser Strahlung durchsetzten Zone bestimmt.

8. Vorrichtung zur Bestimmung wenigstens einer Charakteristik eines Körpers, der aus einer oder mehreren Phasen bekannter Zusammensetzung gebildet ist, durch Bewertung der Intensitätsveränderung einer polychromatischen Strahlung mit einem bekannten Frequenzsspektrum, nach Durchgang durch eine gewisse Dicke des Körpers, wenigstens eine Kammer (6) umfassend, wobei diese Kammer diesen Körper enthalten kann, eine polychromatische Strahlungsquelle, wenigstens eine Vorrichtung (10) zur Erfassung der Strahlung nach Durchführung durch diesen Körper, eine Anordnung, um den Körper (9) im Inneren dieser Kammer zu halten, eine Drehachse (8), wobei diese Anordnung wenigstens eine Führung (12) von der Länge L umfaßt und über wenigstens einen Teil ihrer Länge diese Drehachse (8) umschließt, dadurch gekennzeichnet, daß sie wenigstens ein angepaßtes Verarbeitungssystem (11):

-   zur Veränderung der Intensität umfaßt, indem man das durch die folgende Beziehung (1) definierte Modell zur Anwendung bringt:

$$I(E_i) = I_0(E_i) \exp\left\{ \sum_k \left[ L_k \rho_k \sum_j f_{j,k} \left( \frac{\mu}{\rho} \right)_{j,k} \right] \right\}$$

$I \rightarrow$ Stärke bzw. Intensität der Strahlung X,
$E_i \rightarrow$ Energie des Kanals i des Spektrums X,
$L_k \rightarrow$ in der Phase k durchsetzte Länge,
$\rho_k \rightarrow$ Dichte der Phase k
$f_{j,k} \rightarrow$ Fraktion des Elementes j in der Phase

$$\left( \frac{\mu}{\rho} \right)_{j,k}$$

$\rightarrow$ Massenschwächungskoeffizient für jedes Element j der Phase k

-   zum Vergleich der gemessenen Intensitätsänderung nach Durchgang durch diese Dicke des zu analysierenden Körpers mit den aus diesem Modell abgeleiteten veränderten Werten und

-   zur Bestimmung wenigstens eines charakteristischen Parameters des analysierten Körpers.

9. Vorrichtung nach Anspruch 8, dadurch gekennzeichnet, daß diese Führung mit einem Träger (14) vermittels Mitteln (13, 15) verbunden ist, welche seine Bewegung im Inneren der Kammer erlauben, wobei dieser Träger fest bezüglich einer Wandung der Kammer ist.

**10.** Vorrichtung nach einem der Ansprüche 8 oder 9, dadurch gekennzeichnet, daß die Quelle polychromatischer Strahlung fest mit dieser Führung oder diesem Träger verbunden ist.

**11.** Vorrichtung nach einem der Ansprüche 8 bis 10, dadurch gekennzeichnet, daß sie zur Realisierung einer Tomographie ausgebildet ist.

**12.** Verwendung des Verfahrens nach einem der Ansprüche 1 bis 7 zur Simulierung der Härtung einer polychromatischen Strahlung, die einen Körper durchsetzt hat.

**13.** Anwendung des Verfahrens nach einem der Ansprüche 1 bis 7 zur Charakterisierung einer Probe, beispielsweise einer Gesteins- und/oder einer Verbundprobe auf dem Erdölgebiet.

FIG.1A

FIG.1B

FIG.2

FIG.3

FIG.4

FIG.5

FIG.6

FIG.7

EP 0 800 655 B1

**FIG.8**

**FIG.9**

18